Europäisches Patentamt

European Patent Office

Office européen des brevets

(19)

(11) **EP 1 185 801 B1**

(12) **FASCICULE DE BREVET EUROPEEN**

(45) Date de publication et mention
de la délivrance du brevet:
**24.08.2005 Bulletin 2005/34**

(21) Numéro de dépôt: **01921522.7**

(22) Date de dépôt: **09.04.2001**

(51) Int Cl.⁷: **F16F 7/01**

(86) Numéro de dépôt international:
**PCT/FR2001/001074**

(87) Numéro de publication internationale:
**WO 2001/079725 (25.10.2001 Gazette 2001/43)**

(54) **STRUCTURE D'AMORTISSEMENT ET APPLICATIONS**

DÄMPFUNGSSTRUKTUR UND ANWENDUNGEN

DAMPING STRUCTURE AND USES

(84) Etats contractants désignés:
**BE DE ES FR GB IT**

(30) Priorité: **12.04.2000 FR 0004680**

(43) Date de publication de la demande:
**13.03.2002 Bulletin 2002/11**

(60) Demande divisionnaire:
**04009401.3 / 1 447 588**

(73) Titulaires:
• **EUROCOPTER**
**13725 Marignane Cédex (FR)**
• **Ateca**
**82000 Montauban (FR)**

(72) Inventeurs:
• **DUSSAC, Marc Francis Vincent**
**13140 Miramas (FR)**
• **VIE, Philippe**
**F-31100 Toulouse (FR)**

• **DELVERDIER, Osmin**
**F-31380 St Jean Lherm (FR)**

(74) Mandataire: **Renaud-Goud, Thierry et al**
**GPI & Associés**
**EuroParc de Pichaury**
**Bât D1-1 étage**
**1330, rue Guillibert de la Lauzière**
**13856 Aix-en-Provence Cédex 3 (FR)**

(56) Documents cités:
EP-A- 0 499 526          WO-A-85/05425
WO-A-99/48951          GB-A- 756 835
GB-A- 1 280 301          GB-A- 1 293 391
US-A- 2 417 347          US-A- 3 417 660
US-A- 4 974 794

• **PATENT ABSTRACTS OF JAPAN vol. 012, no. 229 (M-714), 29 juin 1988 (1988-06-29) & JP 63 026444 A (ORII:KK), 4 février 1988 (1988-02-04)**

**Description**

La présente invention concerne une structure d'amortissement, ainsi que des applications d'une telle structure d'amortissement.

Une application préférée concerne l'utilisation de la structure d'amortissement pour amortir des vibrations de pièces vibrantes, telles que la boîte de transmission principale, d'un aéronef à voilure tournante, en particulier un hélicoptère, dans le but notamment de réduire le bruit dans le poste de pilotage et/ou dans la cabine des passagers dudit aéronef.

On sait que, sur un aéronef à voilure tournante, les spectres acoustiques définis dans le domaine compris entre 20 Hz et 20 kHz relèvent de la superposition de bruits d'origines différentes, susceptibles d'être rassemblés en deux groupes différents selon leurs caractéristiques spectrales, à savoir les sons purs ou bruits de raies et les bruits à large bande.

De façon connue, les sons purs ou bruits de raies apparaissent notamment, le cas échéant :

- aux fréquences caractéristiques de la chaîne cinématique de l'aéronef ;
- aux fréquences de rotation des pales des rotors (principal et arrière) et aux harmoniques de ces fréquences ;
- aux fréquences de rotation des pales des compresseurs des groupes turbomoteurs ; et/ou
- aux fréquences de rotation des pales des ventilateurs de refroidissement de la boîte de transmission principale ou de distribution d'air en cabine et/ou d'équipements électriques, ainsi qu'aux harmoniques de ces fréquences,

tandis que les bruits à large bande comprennent notamment le cas échéant :

- le bruit de couche limite se développant sur le fuselage ;
- le bruit engendré par les rotors ;
- le bruit d'écoulement des entrées d'air et des tuyères ;
- le bruit de moteur ; et/ou
- le bruit des circuits de climatisation ou de chauffage du poste de pilotage ou de la cabine des passagers.

Tous ces bruits sont bien entendu gênants pour les pilotes et les passagers.

Il existe différentes solutions connues pour réduire de tels bruits à l'intérieur d'un aéronef à voilure tournante, notamment un hélicoptère.

Une première solution connue a pour objet de réduire le niveau vibratoire ou le rayonnement de sources de bruit et/ou du fuselage. A cet effet, diverses actions physiques peuvent être mises en oeuvre, notamment :

- une réduction des vibrations de la structure et/ou d'organes mécaniques, par amortissement ou modification de la raideur ou de la masse ;
- une atténuation de la transmission acoustique, par amortissement ou modification de la raideur ou de la masse ;
- un effet de double cloison, par un espace rempli ou non par un matériau absorbant entre la structure rayonnante et des panneaux insonorisants ;
- une absorption acoustique par des matériaux fibreux ou alvéolaires ; et
- une absorption acoustique par des résonateurs d'Helmhotz.

Les quatre premières actions physiques précitées permettent de diminuer le niveau général du bruit dans un large domaine de fréquences, mais elles entraînent une augmentation de masse importante et très désavantageuse. De plus, la diminution du bruit obtenue alors n'est pas assez sélective pour faire disparaître la gêne acoustique spécifique à l'émergence des sons purs.

En revanche, la cinquième et dernière action physique précitée permet de réduire efficacement le bruit de raies, mais toutefois uniquement dans une bande étroite de fréquences, définie à la conception.

Cette première solution précitée et basée sur un traitement passif du bruit n'est donc pas totalement efficace, notamment pour ies bruits de raies engendrés par des excitations vibratoires.

Une seconde solution connue préconise de créer des insonorisations passives sous forme de panneaux d'habillage montés dans le poste de pilotage ou dans la cabine des passagers. Ces panneaux sont conçus en fonction de la zone structurale à traiter et du spectre de fréquences à atténuer.

Toutefois, cette seconde solution présente également de nombreux inconvénients et notamment :

- une réduction de bruit limitée surtout en basses fréquences ;
- une augmentation de masse élevée, qui peut être de plusieurs centaines de kilogrammes pour un hélicoptère de grande taille ;

- une perte de volume non négligeable, notamment lors de l'utilisation de panneaux épais en vue d'augmenter l'effet d'absorption acoustique ; et
- des fuites acoustiques, en particulier au niveau des trous de câblage et des joints entre les panneaux.

Par conséquent, aucune de ces deux solutions connues et précitées n'est satisfaisante pour réduire la gêne occasionnée par les bruits, notamment les bruits de raies.

Un des buts de la présente invention est de proposer une solution permettant de réduire de tels bruits.

Le document US-A-2 417 347 décrit un amortisseur de vibrations selon le préambule de la revendication 1.

Le document GB-A-1 293 391 décrit un support antivibratoire comportant un récipient rempli de grenaille et pourvu d'une ouverture, ainsi qu'un piston soutenu par la grenaille et obturant l'ouverture.

La présente invention concerne à cet effet une structure d'amortissement, de réalisation simple et peu coûteuse, présentant de nombreux avantages et pouvant être utilisée dans diverses applications pour amortir des vibrations engendrées par des sources vibrantes, en particulier dans le but de réduire le bruit, et ceci notamment dans un aéronef à voilure tournante, tel qu'un hélicoptère.

A cet effet, ladite structure d'amortissement est remarquable, selon l'invention, en ce qu'elle présente les caracteristiques de la revendication 1.

Ainsi, lorsque ladite structure est soumise à des vibrations, ces vibrations sont transmises aux corps solides (en contact) de l'agrégat, par l'intermédiaire des différents points de contact. Au passage de chacun de ces points de contact, une partie de l'énergie vibratoire est dissipée par friction de sorte que lesdites vibrations sont ainsi amorties de façon rapide et efficace dans ladite structure.

De préférence, ladite structure est allongée, par exemple sous forme d'une barre, et ledit évidement interne est formé longitudinalement à l'intérieur de ladite structure allongée.

Dans le cadre de la présente invention, au moins certains desdits corps solides, qui sont par exemple réalisés en matière synthétique, de préférence des billes, sont creux, ce qui permet de réduire le poids desdits corps solides et donc également le poids de la structure.

De plus, selon l'invention, lesdits corps solides peuvent être réalisés dans des matériaux différents (matière synthétique, métal, ...) et/ou présenter des formes et/ou des tailles (diamètres) différentes.

On notera que :

- une différence d'inertie desdits corps solides, due notamment à des tailles ou des densités différentes ; et/ou
- une différence de raideur desdits corps solides, due notamment à des matériaux différents (par exemple une matière peu rigide et intrinsèquement très amortissante ou une matière plus rigide et intrinsèquement moins amortissante),

entraînent un mouvement différent sous l'effet d'une excitation vibratoire et donc également une amplitude d'amortissement différente. Par conséquent, par un choix approprié de ces caractéristiques, on peut régler et optimiser l'amortissement mis en oeuvre par la structure d'amortissement conforme à l'invention.

Ladite structure comporte, de plus, au moins une cloison interne, pleine ou percée, de forme quelconque, notamment tubulaire, qui est solidaire ou non de la paroi de ladite structure et qui est agencée à l'intérieur dudit évidement interne.

Ceci permet d'augmenter la surface d'échange (frottement) entre la structure et l'agrégat et donc également l'amortissement des vibrations.

En outre, de façon avantageuse :

- ledit agrégat comprend de plus un liquide visqueux remplissant les espaces entre lesdits corps solides ; et/ou
- lesdits moyens pour fermer ledit évidement interne comportent une plaque rigide qui est contrainte par un élément élastique.

En plus des avantages précités, la structure d'amortissement conforme à l'invention présente également les avantages suivants :

- elle peut être facilement réalisée et présente un coût de fabrication faible, notamment lorsque l'évidement interne existe déjà dans la structure ;
- elle présente une masse réduite (notamment lorsque l'on utilise des corps solides creux) par rapport à certains moyens d'amortissement connus, tels que le collage de matériaux viscoélastiques, contraints ou non, sur la surface de la structure à amortir ;
- l'agrégat qu'elle comporte est protégé contre des agressions externes (feu, humidité, agents corrosifs, ...) par la structure elle-même ;

- elle est efficace sur une large bande de fréquences et ceci pour différents types de déformation (flexion, traction-compression, torsion, ...) de la structure ;
- elle n'est pas soumise à des phénomènes d'abrasion, de corrosion ou d'érosion, si on choisit un couple approprié de matériaux respectivement pour la paroi de la structure et l'agrégat ; et
- elle n'entraîne aucune modification de la durée de vie des pièces, auxquelles elle est associée.

Dans une application particulière, ladite structure peut être réalisée sous forme d'un pignon creux (d'une boîte de transmission ou de tout autre dispositif mécanique) qui est rempli dudit agrégat conformément à l'invention.

La présente invention concerne également un système de suspension d'une boîte de transmission d'un aéronef à voilure tournante, notamment d'un hélicoptère.

Selon l'invention, ledit système de suspension qui comprend une pluralité de barres de suspension est remarquable en ce qu'au moins l'une desdites barres de suspension comporte une structure telle que celle précitée.

Ainsi, on augmente l'amortissement équivalent d'au moins l'une desdites barres, ce qui permet de réduire efficacement, dans le poste de pilotage et/ou la cabine des passagers de l'aéronef, le bruit d'origine solidienne qui est transmis par lesdites barres traitées.

La présente invention concerne également deux types de dispositif d'amortissement utilisant la structure précitée, pour amortir les vibrations d'une pièce vibrante quelconque, par exemple :

- une bielle ;
- un moteur ;
- une boîte de vitesses ; ou
- un organe tournant, tel qu'un compresseur ou un ventilateur par exemple.

Un premier de ces dispositifs d'amortissement comprend une structure d'amortissement conforme à l'invention qui est agencée entre la pièce vibrante et un support.

On notera que la structure utilisée est rigide et peut soit être rapportée dans un espace vide, soit remplacer directement un élément préexistant assurant d'autres fonctions, en particulier mécaniques ou structurales, telle qu'une bielle par exemple.

Un second dispositif d'amortissement pour amortir les vibrations d'une pièce vibrante comportant au moins un élément creux, par exemple une barre de suspension de ladite pièce vibrante, est obtenu en réalisant ledit élément sous la forme de la structure d'amortissement précitée. Dans le cadre de la présente invention, l'évidement de cet élément peut être soit un évidement préexistant, soit un évidement pratiqué spécifiquement pour la mise en oeuvre de la présente invention.

Ce second dispositif d'amortissement présente l'avantage supplémentaire de ne pas augmenter l'encombrement.

Les figures du dessin annexé feront bien comprendre comment l'invention peut être réalisée. Sur ces figures, des références identiques désignent des éléments semblables.

La figure 1 montre schématiquement une structure d'amortissement conforme à l'invention.

Les figures 2 et 3 montrent des structures conformes à l'invention comprenant différents types de corps solides.

Les figures 4 à 7 et 8 à 11 montrent, de façon schématique, différents modes de réalisation de cloisons internes de la structure conforme à l'invention, respectivement en vue longitudinale et en vue en plan.

La figure 12 illustre schématiquement une décomposition mécanique de la structure conforme à l'invention.

La figure 13 montre une application préférée de la structure conforme à l'invention, relative à la suspension de la boîte de transmission principale d'un hélicoptère.

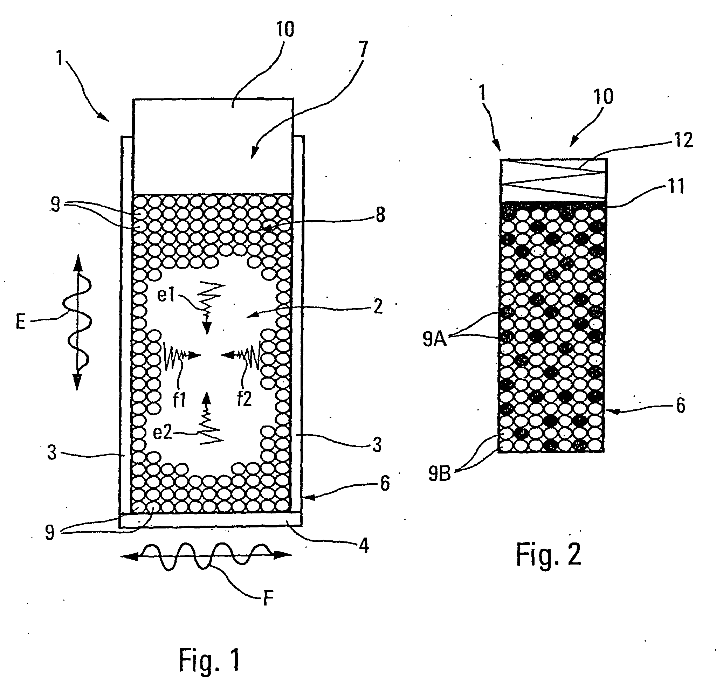

La structure d'amortissement 1 conforme à l'invention et représentée schématiquement sur la figure 1 est un élément mécanique précisé ci-dessous qui, selon l'invention, présente un évidement interne 2, entouré par des parois 3, 4 formant une enceinte 6 et débouchant par une ouverture 7.

Selon l'invention, ladite structure 1 comporte :

- un agrégat 8 qui comprend des corps solides 9 en contact et qui remplit complètement ledit évidement interne 2, bien que pour des raisons de simplification du dessin, on n'ait pas représenté les corps solides 9 dans toute l'enceinte 6 sur la figure 1 ; et
- des moyens 10 pour fermer l'évidement interne 2 et presser ledit agrégat 8 dans ledit évidement interne 2, contre lesdites parois 3 et 4.

Ainsi, lorsque la structure 1 est soumise à des vibrations, par exemple des vibrations longitudinales E ou des vibrations latérales F, ces vibrations sont transmises par les parois 3 et 4 aux corps solides 9 (en contact) de l'agrégat 8 qui est pressé, par l'intermédiaire des différents points de contact. Au passage de chacun de ces points de contact, une partie de l'énergie vibratoire est dissipée par friction de sorte que lesdites vibrations sont ainsi amorties de façon rapide et efficace dans ladite structure 1, comme cela est représenté sur la figure 1 avec des amortissements e1 et e2 pour les vibrations longitudinales E et des amortissements f1 et f2 pour les vibrations latérales F.

Bien entendu, la structure 1 peut présenter différentes formes, plus ou moins massives. De préférence, toutefois, elle présente une forme allongée, à la manière d'une barre par exemple, et ledit évidement interne 2 est formé longitudinalement à ladite structure 1 à l'intérieur d'une enceinte 6 tubulaire, comme représenté sur la figure 1.

Dans le cadre de la présente invention, lesdits corps solides 9, qui sont réalisés par exemple en matière synthétique, de préférence des billes, peuvent être :

- soit pleins, toute leur masse étant alors occupée par de la matière ;
- soit creux, ce qui permet de réduire le poids desdits corps solides 9 et donc également le poids de la structure 1.

De plus, selon l'invention, lesdits corps solides 9 :

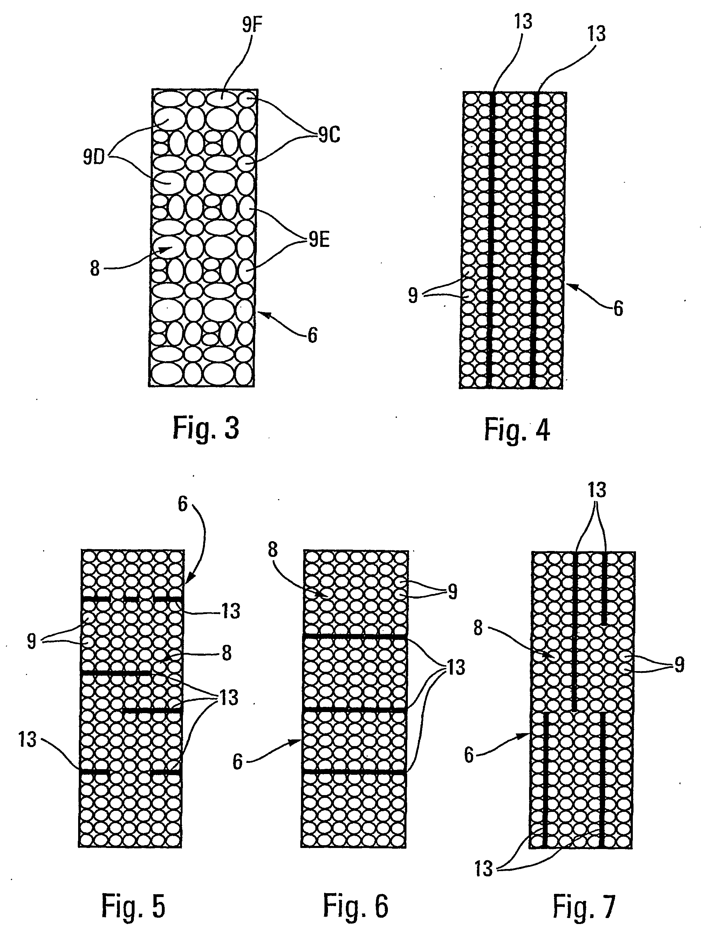

- peuvent être réalisés dans des matériaux différents (polymère, céramique métallique, élastomère ...), comme cela est représenté sur la figure 2 montrant des corps solides 9A et 9B de forme et de taille identiques, mais réalisés dans des matériaux différents ; et/ou
- peuvent présenter des formes et/ou des tailles (diamètres) différentes, comme représenté sur la figure 3, notamment pour des corps 9C, 9D, 9E et 9F.

On notera que :

- une différence d'inertie des corps solides 9A à 9F, due notamment à des tailles ou des densités différentes ; et/ou
- une différence de raideur des corps solides 9A et 9B, due notamment à des matériaux différents (par exemple une matière peu rigide et intrinsèquement très amortissante ou une matière plus rigide et intrinsèquement moins amortissante),

entraînent un mouvement différent sous l'effet d'une excitation vibratoire et donc également une amplitude d'amortissement différente. Par conséquent, par un choix approprié de ces caractéristiques, on peut régler et optimiser l'amortissement mis en oeuvre par la structure 1.

En plus desdits corps solides 9, pleins ou creux, l'agrégat 8 peut également comporter un liquide visqueux, par exemple de l'huile, remplissant les espaces libres dans l'enceinte 6 entre lesdits corps solides 9. Ces derniers sont alors noyés dans un milieu lubrifiant, ce qui permet de retarder un éventuel échauffement.

Par ailleurs, dans un mode de réalisation préféré représenté sur la figure 2, les moyens 10 comportent :

- une plaque rigide 11, par exemple une plaque métallique, qui est adaptée à l'ouverture 7 de manière à pouvoir fermer, de préférence de façon étanche, l'enceinte 6 ; et
- un moyen élastique 12, de préférence un ressort, qui exerce une pression élastique sur ladite plaque rigide 11 de manière à contraindre l'agrégat 8, c'est-à-dire à le presser dans l'enceinte 6, et même éventuellement à le comprimer s'il comporte une quantité réduite de liquide ou si les corps solides 9 sont peu rigides.

Par ailleurs, la structure d'amortissement 1 conforme à l'invention comporte, de plus, au moins une cloison interne 13, qui est solidaire d'une paroi 3 ou 4 de l'enceinte 6 de la structure 1 et qui est agencée à l'intérieur de l'évidement 2.

A titre d'illustration, on a représenté différents exemples de cloisons 13 :

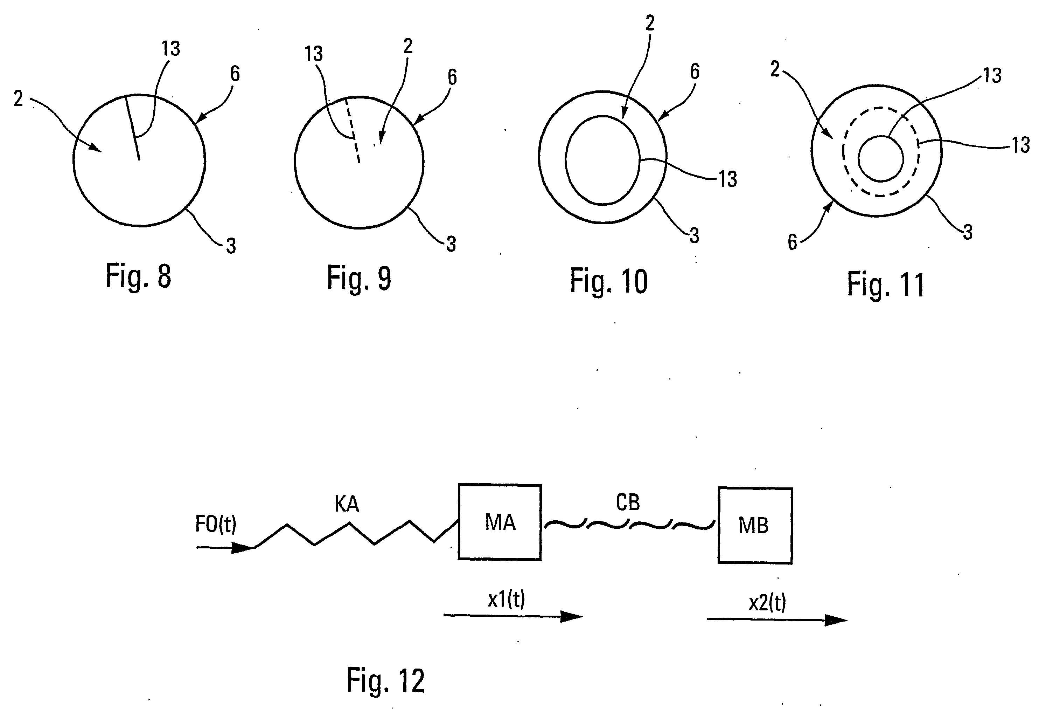

- dans une vue en coupe longitudinale schématique, sur les figures 4 à 7 ; et
- dans une vue en plan, sur les figures 8 à 11.

Comme on peut le voir sur ces figures 4 à 11, les cloisons 13 :

- peuvent être pleines (figures 4, 5, 6, 7, 8, 10 et 11 ) ou percées (figures 5, 9 et 11) ; et
- peuvent présenter des formes quelconques, par exemple planes (figures 4 à 9) ou tubulaires (figures 10 et 11). Dans ce dernier cas, les cloisons 13 peuvent présenter tout type de section transversale : circulaire, elliptique ou simplement quelconque.

Ces cloisons internes 13 permettent d'augmenter la surface d'échange et donc la surface de frottement entre, d'une part, les faces internes des parois 3, 4 de l'enceinte 6 et, d'autre part, l'agrégat 8, ce qui permet d'accroître l'amortissement des vibrations de la structure 1.

En plus des avantages précités, la structure 1 conforme à l'invention présente également les avantages suivants :

- elle peut être facilement réalisée et présente un coût de fabrication faible, notamment lorsque l'évidement interne 2 existe déjà dans la structure 1 ;
- elle présente une masse réduite (notamment lorsque l'on utilise des corps solides 9 creux) par rapport à certains moyens d'amortissement connus, tels que des matériaux amortissants collés directement sur la surface de la structure à amortir ;
- l'agrégat 8 qu'elle comporte est protégé contre des agressions externes (feu, humidité, agents corrosifs, ...) par l'enceinte 6 ;
- elle est efficace sur une large bande de fréquences et ceci pour différents types de déformation (flexion, traction-compression, torsion, ...) de la structure 1 ;
- elle n'est pas soumise à des phénomènes d'abrasion, de corrosion ou d'érosion, si on choisit un couple approprié de matériaux respectivement pour la paroi 3, 4 de la structure 1 et pour l'agrégat 8 ; et
- elle n'entraîne aucune modification de la durée de vie des pièces, auxquelles elle est associée.

On précise ci-après, en référence à la figure 12, l'effet physique du remplissage (de l'évidement 2 par l'agrégat 8) sur le comportement vibratoire d'une structure 1 initialement creuse (évidement 2 existant, mais vide).

Trois modes différents de sollicitation des structures creuses 1 peuvent être traités par le remplissage par un agrégat 8, à savoir :

- la flexion ;
- la traction-compression ; et
- la torsion.

On considère la réponse vibratoire d'une structure creuse 1 comme la superposition linéaire de réponses de systèmes du second ordre, caractérisés chacun par une fréquence propre, un amortissement modal, une masse modale et une raideur modale.

A une fréquence donnée, on peut remplacer la structure 1 et l'ensemble de l'agrégat 8 par les deux systèmes couplés représentés sur la figure 12, dans lesquels :

- MA et KA représentent respectivement la masse modale et la raideur modale réelle de la structure 1 non traitée sollicitée en flexion, longitudinal ou torsion ;
- MB représente la masse équivalente de l'agrégat 8, mise en mouvement par le couplage avec la structure 1 creuse sollicitée en flexion, longitudinal ou torsion ; et
- CB traduit le frottement interne apporté par l'agrégat 8.

Le remplissage de l'évidement 2 modifie la réponse vibratoire de la structure 1, mais ne modifie pas la force d'excitation F0 provenant de l'excitation en amont (carter, par exemple, pour la boîte de transmission principale d'un hélicoptère).

En régime harmonique, les déplacements respectifs au cours du temps x1(t) et x2(t), les vitesses respectives v1(t) et v2(t) et les accélérations respectives $\gamma$1(t) et $\gamma$2(t) vérifient pour une fréquence angulaire $\omega$ quelconque de la force d'excitation d'amplitude F, avec F0(t) = F($\omega$).sin($\omega$t) :

$$v1(t) = j\omega\, x1(t) \qquad et \qquad v(2)t = j\omega\, x2(t)$$
$$\gamma1(t) = -\omega^2 x\, 1(t) \qquad et \qquad \gamma2 = -\omega^2 x2(t).$$

La somme des forces appliquées (forces de rappel, force de frottement due au couplage avec l'autre masse, et éventuellement force extérieure F0) à chaque masse étant égale à sa force inertielle, s'écrit donc pour chaque masse :

- en fonction du temps t :

  • pour la masse MA : F0(t) -KA x1 (t) - CB (v1 (t)-v2(t))    = MA $\gamma$1 (t)
  • pour la masse MB :      0      - CB (v2(t)-v1 (t))      = MB $\gamma$2(t)

- en fonction de la fréquence angulaire $\omega$ :

  • pour la masse MA : F($\omega$)-KAX1($\omega$)   -CBj$\omega$(X1($\omega$)-X2($\omega$))   = -MA $\omega^2$X1($\omega$)
  • pour la masse MB :   0   -CBj$\omega$(X2($\omega$)-X1($\omega$))   = -MB $\omega^2$X2($\omega$) avec j$^2$=-1 et X1($\omega$) et X2($\omega$) des quantités complexes.

A partir de là, il est facile de déterminer (en considérant la fréquence f en Hz) le spectre de l'amplitude accélération/force et le spectre de déphasage de l'accélération par rapport à la force, accessibles par la mesure (avec f=$\omega$/2$\pi$ et fA=$\omega$A/2$\pi$, fA et $\omega$A étant respectivement la fréquence propre et la pulsation propre de la structure A (structure 1 non remplie)).

On en déduit que l'effet du remplissage (agrégat 8) de l'enceinte 6 sur le comportement vibratoire de la structure 1 se traduit par :

- une forte diminution du maximum de la réponse en amplitude (définissant la fréquence de résonance du système amorti) ;
- un glissement relativement important du maximum de la réponse en amplitude vers les basses fréquences ;
- un élargissement important du spectre de réponse en amplitude ; et
- un aplatissement important de la courbe de réponse en phase.

Par ailleurs, le coefficient CB peut être exprimé théoriquement au voisinage du mode propre $\omega$A par :

$$CB = \alpha B \ 2\Pi fA \ mB \ tg(\delta B)$$

avec :

- $\alpha$B : un coefficient sans dimension qui traduit l'efficacité réelle du remplissage ;
- $\delta$B : un angle de perte intrinsèque du matériau de remplissage, connu au préalable ; et
- mB : la masse physique apportée par le remplissage (agrégat 8).

On vérifie donc que :

- plus l'angle de perte du matériau est élevé, plus l'amortissement équivalent est important ;
- l'amortissement équivalent est proportionnel à mB ; et
- plus la qualité du contact est élevée, meilleure est l'efficacité en amortissement du remplissage (agrégat 8).

L'optimisation de l'amortissement consiste à augmenter CB, c'est-à-dire la masse amortissante de l'agrégat 8, qui est définie par $\alpha$B mB tg($\delta$B).

Les paramètres technologiques permettant d'augmenter cette masse amortissante sont :

- pour l'angle de perte $\delta$B :

  . le nombre de types de corps solides 9 utilisés (un seul type ou un mélange de plusieurs types) ;
  . la nature des constituants : polymère, céramique métallique ou élastomère ;
  . la viscosité du liquide de remplissage éventuellement utilisé,

- pour le coefficient d'efficacité $\alpha$B :

  . l'état de surface des corps solides 9 constituant l'agrégat 8 ;
  . la pression statique de compactage engendré par les moyens 10,

- pour la masse de remplissage mB :

  . la masse volumique moyenne des corps solides 9 constituant l'agrégat 8 ;
  . le diamètre moyen des corps solides 9 constituant l'agrégat 8 ;
  . l'épaisseur de paroi des corps solides 9 constituant l'agrégat 8, si ceux-ci sont creux.

De nombreuses applications sont bien entendu possibles pour la structure d'amortissement 1 conforme à l'invention.

En particulier, ladite structure 1 peut être utilisée pour amortir les vibrations de divers types de pièces vibrantes. Elle peut, ainsi, notamment être employée comme partie :

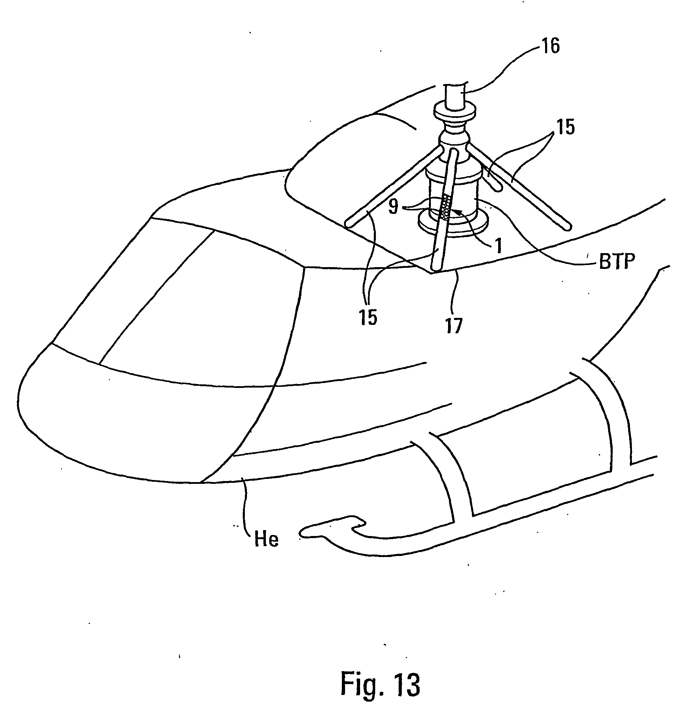

- d'une barre de liaison entre un support à isoler par rapport à des vibrations et un carter englobant des éléments tournants engendrant ces vibrations, comme on le verra plus en détail ci-après en référence à la figure 13 ; ou
- d'une suspension de moteur, de boîte de vitesses ou d'un organe tournant, tel qu'un compresseur ou un ventilateur par exemple.

Selon l'invention, pour réaliser la suspension d'une pièce vibrante par rapport à un support de manière à isoler ce dernier des vibrations de ladite pièce vibrante, une ou plusieurs structures 1, notamment sous forme de barre, peuvent :

- être rapportées et agencées à des endroits libres entre la pièce vibrante et le support ; ou
- remplacer des éléments, par exemple des bielles, existant déjà sur la pièce ou le support ; ou
- être formées dans des éléments (creux ou non) existant déjà.

Les deux dernières solutions présentent de plus l'avantage de ne pas augmenter l'encombrement.

Des applications préférées de la structure d'amortissement 1 concernent la réduction de vibrations génératrices de bruit, sur un aéronef à voilure tournante, notamment un hélicoptère, et en particulier la réduction :

- du bruit d'engrènement ou de roulement provenant des boîtes de transmission ; et/ou
- du bruit d'engrènement ou de roulement de boîtiers accessoires (pompes de lubrification, entraînement de groupes de ventilation, climatisation ...),

bruits qui sont très gênants en cabine, à la fois pour les pilotes et les passagers.

L'application particulière de l'invention, représentée sur la figure 13, a pour objet d'accroître l'amortissement de barres de suspension 15 d'un système de suspension de la boîte de transmission principale BTP (reliée au mât 16 du rotor d'avance et de sustentation) d'un hélicoptère He, barres de suspension 15 qui sont agencées sur le fuselage 17 de l'hélicoptère He.

Pour ce faire, ces barres de suspension 15 comportent chacune une structure d'amortissement 1 conforme à l'invention, comme on peut le voir pour l'une de ces barres 15 qui est partiellement arrachée sur la figure 13.

Ceci est réalisé dans le but de réduire en cabine le bruit d'origine solidienne transmis par les barres 15, c'est-à-dire l'énergie vibratoire transmise par lesdites barres 15, traduite par une expression $|H(f)||\gamma barre|^2(f)$ précisée ci-dessous.

De façon générale, on peut considérer que le spectre de pression acoustique dans la cabine de l'hélicoptère He, noté Pcab(f), vérifie la relation quadratique suivante :

$$Pcab^2(f)=|T(f)||Pdirect|^2(f)+|H(f)||\gamma barre|^2(f)+|Q(f)||\gamma structure|^2(f)$$

En effet, cette sommation d'amplitudes au carré traduit le bilan des transferts énergétiques pour le bruit d'engrènement aux fréquences supérieures à 500 Hz. Il n'y a pas lieu de prendre en compte les relations de phase entre pression en cabine et pression directe ou accélérations de la structure (fuselage) de l'hélicoptère He, compte tenu du grand nombre de modes acoustiques présents en cabine à ces fréquences.

On notera que :

- le terme $|T(f)||Pdirect|^2(f)$ représente la pression acoustique quadratique en cabine, due uniquement au bruit rayonné directement par la boîte de transmission principale BTP de l'hélicoptère Hé. $|T(f)|$ représente le module du coefficient de transmission acoustique (sans dimension) du bruit rayonné par voie aérienne d'amplitude Pdirect jusqu'à la cabine ;
- le terme $|H(f)||\gamma barre|^2(f)$ représente la pression acoustique en cabine, due uniquement au bruit rayonné en cabine par la structure (partie de fuselage 17) excitée par les vibrations des attaches des barres 15. $|H(f)|$ représente l'efficacité de rayonnement acoustique en cabine des vibrations de cette partie du fuselage ;
- le terme $|Q(f)||\gamma structure|^2(f)$ représente la pression acoustique quadratique en cabine, due uniquement au bruit rayonné en cabine par le reste du fuselage qui n'est pas excité par les vibrations des attaches des barres 15, mais par le fond de la boîte de transmission BTP par exemple. $|Q(f)|$ représente le module du coefficient de rayonnement acoustique en cabine de cette dernière partie de fuselage.

De ce qui précède, il apparaît que la réduction du bruit en cabine sera significative aux fréquences d'engrènement, pour lesquelles la relation suivante est vérifiée en l'absence de traitement :

$$|H(f)||\gamma barre|^2(f) >> |T(f)||Pdirect|^2 (f) + |Q(f)||\gamma structure|^2(f).$$

## Revendications

**1.** Structure (1) d'amortissement présentant un évidement interne (2) entouré par des parois (3,4) formant une enceinte (6) et débouchant par une ouverture (7), et comportant un agrégat (8) qui comprend au moins des corps solides (9) en contact, la structure comportant en outre des moyens (10,11) adaptés à l'ouverture (7) pour fermer l'évidement interne (2), et au moins une cloison interne (13) qui est agencée à l'intérieur dudit évidement interne (2), la structure étant **caractérisée en ce que** l'agrégat (8) remplit ledit évidement interne (2) et **en ce qu'**au moins certains desdits corps solides (9) sont creux.

**2.** Structure d'amortissement selon la revendication 1,
**caractérisée en ce qu'**elle comporte de plus un moyen élastique (12) qui exerce une pression sur ledit agrégat (8) de manière à le contraindre.

**3.** Structure d'amortissement selon la revendication 1 ou 2,
**caractérisée en ce que** ladite cloison interne (13) est au moins partiellement percée.

**4.** Structure d'amortissement selon l'une quelconque des revendications 1 à 3,
**caractérisée en ce que** les moyens pour fermer l'évidemment comportent une plaque rigide (11).

**5.** Structure d'amortissement selon les revendications 2 et 4,
**caractérisée en ce que** le moyen élastique (12) exerce une pression élastique sur ladite plaque rigide (11) de manière à contraindre ledit agrégat (8).

**6.** Structure d'amortissement selon l'une quelconque des revendications précédentes,
**caractérisée en ce qu'**elle est allongée et **en ce que** ledit évidement interne (2) est formé longitudinalement à l'intérieur de ladite structure (1).

**7.** Structure d'amortissement selon l'une quelconque des revendications précédentes,
**caractérisée en ce que** certains desdits corps solides (9) sont pleins.

**8.** Structure d'amortissement selon l'une quelconque des revendications précédentes,
**caractérisée en ce que** ledit agrégat (8) comporte des corps solides (9A, 9B) réalisés dans des matériaux différents.

**9.** Structure d'amortissement selon l'une quelconque des revendications précédentes,
**caractérisée en ce que** ledit agrégat (8) comporte des corps solides (9C, 9D, 9E , 9F) présentant des formes différentes.

**10.** Structure d'amortissement selon l'une quelconque des revendications précédentes,
**caractérisée en ce que** ledit agrégat (8) comporte des corps solides (9C, 9D, 9E, 9F) présentant des tailles différentes.

**11.** Structure d'amortissement selon l'une quelconque des revendications précédentes,
**caractérisée en ce que** ladite cloison interne (13) présente une forme tubulaire.

**12.** Structure d'amortissement selon l'une quelconque des revendications précédentes,
**caractérisée en ce que** ledit agrégat (8) remplit complètement ledit évidement (2) et **en ce que** l'enceinte (6) est rigide.

**13.** Structure d'amortissement selon l'une quelconque des revendications précédentes,
**caractérisée en ce que** ledit agrégat (8) comprend de plus un liquide visqueux remplissant les espaces entre lesdits corps solides (9).

14. Structure d'amortissement selon l'une quelconque des revendications précédentes, **caractérisée en ce qu'**elle est réalisée sous forme d'un pignon.

15. Système de suspension d'une boîte de transmission d'un aéronef à voilure tournante, notamment un hélicoptère, ledit système de suspension comprenant une pluralité de barres de suspension (15), **caractérisé en ce qu'**au moins l'une desdites barres de suspension (15) comporte une structure d'amortissement selon l'une quelconque des revendications 1 à 13.

16. Dispositif pour amortir les vibrations d'une pièce vibrante montée sur un support, **caractérisé en ce qu'**il comporte une structure d'amortissement (1) telle que celle spécifiée sous l'une quelconque des revendications 1 à 14, qui est agencée entre ladite pièce vibrante (BTP) et ledit support (17).

17. Dispositif pour amortir les vibrations d'une pièce vibrante comportant au moins un élément creux, **caractérisé en ce que** ledit élément creux (15) est réalisé sous la forme d'une structure d'amortissement (1) telle que celle spécifiée sous l'une quelconque des revendications 1 à 14.


**Patentansprüche**

1. Dämpfungsstruktur (1) mit einer von Wänden (3, 4), die eine Umhüllung (6) bilden und in einer Öffnung (7) münden, umgebenen inneren Aussparung (2) und mit einem Aggregat (8), das mindestens in Kontakt stehende Festkörper (9) enthält, wobei die Struktur außerdem an die Öffnung (7) angepasste Mittel (10, 11), um die innere Aussparung (2) zu verschließen, und mindestens eine innere Trennwand (13) aufweist, die innerhalb der inneren Aussparung (2) angeordnet ist, wobei die Struktur **dadurch gekennzeichnet ist, dass** das Aggregat (8) die innere Aussparung (2) füllt, und dass mindestens einige der Festkörper (9) hohl sind.

2. Dämpfungsstruktur nach Anspruch 1, **dadurch gekennzeichnet, dass** sie außerdem ein elastisches Mittel (12) aufweist, das einen Druck auf das Aggregat (8) ausübt, um es zu pressen.

3. Dämpfungsstruktur nach Anspruch 1 oder 2, **dadurch gekennzeichnet, dass** die innere Trennwand (13) zumindest zum Teil durchlöchert ist.

4. Dämpfungsstruktur nach einem der Ansprüche 1 bis 3, **dadurch gekennzeichnet, dass** die Mittel zum Schließen der Aussparung eine steife Platte (11) aufweisen.

5. Dämpfungsstruktur nach den Ansprüchen 2 und 4, **dadurch gekennzeichnet, dass** das elastische Mittel (12) einen elastischen Druck auf die steife Platte (11) ausübt, um das Aggregat (8) zu pressen.

6. Dämpfungsstruktur nach einem der vorhergehenden Ansprüche, **dadurch gekennzeichnet, dass** sie länglich ist, und dass die innere Aussparung (2) im Inneren der Struktur (1) in Längsrichtung ausgebildet ist.

7. Dämpfungsstruktur nach einem der vorhergehenden Ansprüche, **dadurch gekennzeichnet, dass** manche der Festkörper (9) massiv sind.

8. Dämpfungsstruktur nach einem der vorhergehenden Ansprüche, **dadurch gekennzeichnet, dass** das Aggregat (8) Festkörper (9A, 9B) aufweist, die aus verschiedenen Materialien hergestellt sind.

9. Dämpfungsstruktur nach einem der vorhergehenden Ansprüche, **dadurch gekennzeichnet, dass** das Aggregat (8) Festkörper (9C, 9D, 9E, 9F) mit unterschiedlichen Formen aufweist.

10. Dämpfungsstruktur nach einem der vorhergehenden Ansprüche, **dadurch gekennzeichnet, dass** das Aggregat (8) Festkörper (9C, 9D, 9E, 9F) mit unterschiedlichen Größen aufweist.

11. Dämpfungsstruktur nach einem der vorhergehenden Ansprüche, **dadurch gekennzeichnet, dass** die innere Trennwand (13) rohrförmig ist.

**12.** Dämpfungsstruktur nach einem der vorhergehenden Ansprüche, **dadurch gekennzeichnet, dass** das Aggregat (8) die Aussparung (2) vollständig ausfüllt, und dass die Umhüllung (6) steif ist.

**13.** Dämpfungsstruktur nach einem der vorhergehenden Ansprüche, **dadurch gekennzeichnet, dass** das Aggregat (8) außerdem eine viskose Flüssigkeit enthält, die die Zwischenräume zwischen den Festkörpern (8) füllt.

**14.** Dämpfungsstruktur nach einem der vorhergehenden Ansprüche, **dadurch gekennzeichnet, dass** sie in Form eines Ritzels hergestellt ist.

**15.** Aufhängungssystem eines Getriebegehäuses eines DrehflügelFlugzeugs, insbesondere eines Hubschraubers, wobei das Aufhängungssystem mehrere Tragstreben (15) aufweist, **dadurch gekennzeichnet, dass** mindestens eine der Tragstreben (15) eine Dämpfungsstruktur nach einem der Ansprüche 1 bis 13 aufweist.

**16.** Vorrichtung zum Dämpfen der Schwingungen eines auf einen Träger montierten vibrierenden Bauteils, **dadurch gekennzeichnet, dass** sie eine Dämpfungsstruktur (1) wie diejenige aufweist, die in einem der Ansprüche 1 bis 14 spezifiziert ist, die zwischen dem vibrierenden Bauteil (BTP) und dem Träger (17) angeordnet ist.

**17.** Vorrichtung zum Dämpfen der Schwingungen eines vibrierenden Bauteils, das mindestens ein hohles Element aufweist, **dadurch gekennzeichnet, dass** das hohle Element (15) in Form einer Dämpfungsstruktur (1) wie diejenige ausgebildet ist, die in einem der Ansprüche 1 bis 14 spezifiziert ist.

**Claims**

**1.** A damping structure (1), having an inner cavity (2) surrounded by walls (3, 4) forming an enclosure (6) and opening at an aperture (7), and including an aggregate (8) which comprises at least firm bodies (9) in contact with one another, the structure further including means (10, 11) adapted to the aperture (7), for closing the inner cavity (2), and at least one inner partition (13) which is arranged inside the said inner cavity (2), the structure being **characterised in that** the aggregate (8) fills the said inner cavity (2), and **in that** at least some of the said firm bodies (9) are hollow.

**2.** A damping structure according to Claim 1, **characterised in that** it further includes a resilient means (12) which exerts a pressure on the said aggregate (8) in order to compress it.

**3.** A damping structure according to Claim 1 or 2, **characterised in that** the said inner partition (13) is pierced at least in certain parts.

**4.** A damping structure according to any one of Claims 1 to 3, **characterised in that** the means for closing the cavity include a rigid plate (11).

**5.** A damping structure according to Claims 2 and 4, **characterised in that** the resilient means (12) exerts a resilient pressure on the said rigid plate (11) such that the said aggregate (8) is compressed.

**6.** A damping structure according to any one of the preceding claims, **characterised in that** it is elongated, and **in that** the said inner cavity (2) is formed longitudinally within the said structure (1).

**7.** A damping structure according to any one of the preceding claims, **characterised in that** some of the said firm bodies (9) are solid.

**8.** A damping structure according to any one of the preceding claims, **characterised in that** the said aggregate (8) includes firm bodies (9A, 9B) made of different materials.

**9.** A damping structure according to any one of the preceding claims, **characterised in that** the said aggregate (8) includes firm bodies (9C, 9D, 9E, 9F) of different shapes.

**10.** A damping structure according to any one of the preceding claims, **characterised in that** the said aggregate (8) includes firm bodies (9C, 9D, 9E, 9F) of different sizes.

**11.** A damping structure according to any one of the preceding claims, **characterised in that** the said inner partition (13) is tubular in shape.

**12.** A damping structure according to any one of the preceding claims, **characterised in that** the said aggregate (8) completely fills the said cavity (2), and **in that** the enclosure (6) is rigid.

**13.** A damping structure according to any one of the preceding claims, **characterised in that** the said aggregate (8) further comprises a viscous liquid filling the spaces between the said firm bodies (9).

**14.** A damping structure according to any one of the preceding claims, **characterised in that** it takes the form of a pinion.

**15.** A system of suspension for a gearbox of a rotor aircraft, in particular a helicopter, the said system of suspension comprising a plurality of suspension rods (15), **characterised in that** at least one of the said suspension rods (15) includes a damping structure according to any one of Claims 1 to 13.

**16.** A device for damping the vibrations of a vibrating part mounted on a support, **characterised in that** it includes a damping structure (1) as specified in any one of Claims 1 to 14, which is arranged between the said vibrating part (principal gearbox BTP) and the said support (17).

**17.** A device for damping the vibrations of a vibrating part including at least one hollow element, **characterised in that** the said hollow element (15) takes the form of a damping structure (1) as specified in any one of Claims 1 to 14.

Fig. 1

Fig. 2

Fig. 3

Fig. 4

Fig. 5

Fig. 6

Fig. 7

Fig. 8

Fig. 9

Fig. 10

Fig. 11

FO(t)    KA    MA    CB    MB

x1(t)        x2(t)

Fig. 12

EP 1 185 801 B1

Fig. 13